# DEMANDE DE BREVET EUROPEEN

(11) **EP 4 595 838 A1**
(43) Date de publication de la demande: **06.08.2025**
(21) Numéro de dépôt: 25155052.1
(22) Date de dépôt: 30.01.2025
(51) Int. Cl.: A47J 37/06

(54) **APPAREIL DE CUISSON MUNI D'UN PLATEAU EN MATIÈRE MINÉRALE SOLIDARISÉ À UN MONTANT**

(30) Priorité: 01.02.2024 FR 2400999
(71) Demandeur: Lagrange, 69390 Vourles (FR)
(72) Inventeur: CONDAMIN, Thibaud, 69007 LYON (FR); ELIE, Jérôme, 69007 LYON (FR); LAGRANGE, Clément, 69007 LYON (FR)
(74) Mandataire: Opilex

(57) **Abrégé**

L'invention porte sur un appareil de cuisson mobile (1), comprenant :
-un plateau en matière minérale (2) s'étendant selon un plan de réception, comportant un premier évidement (21);
-un élément de liaison (3) comportant une platine (31) en saillie, une partie de liaison (32) comportant un ergot (33) en prise dans ledit premier évidement (21) ;
-un montant (4) présentant un conduit (41) et comprenant une butée inférieure (42) et une butée supérieure (43), une ouverture (46) du conduit (41) étant positionnée verticalement entre la butée inférieure (42) et la butée supérieure (43), ladite platine (31) traversant l'ouverture (41), la partie de liaison (32) et l'ergot (33) étant positionnés entre la butée inférieure (42) et la butée supérieure (43) de façon à empêcher le retrait de l'ergot (33) dudit premier évidement (21) ;
-un élément de fixation (5) solidarisant la platine (31) au montant (4).

## Description

L'invention concerne de façon générale les appareils de cuisson, et en particulier les appareils de cuisson destinés à faire fondre du fromage de type appareil à raclette.

De tels appareils de cuisson sont le plus souvent utilisés pour faire fondre du fromage à raclette ou réchauffer d'autres aliments et disposent d'au moins un plateau afin que plusieurs convives puissent positionner des coupelles remplies d'aliments sur ce plateau. Une résistance chauffante surplombe généralement ce plateau afin de faire griller ou chauffer les aliments positionnés dans des coupelles sur ledit plateau. La résistance chauffante est le plus souvent surmontée d'un plateau supérieur, permettant à la fois de poser des objets sur l'appareil de cuisson et de concentrer le réchauffement vers le plateau portant les coupelles. Un troisième plateau peut être positionné en dessous du plateau principal, afin par exemple de ranger les coupelles temporairement non utilisées lors de l'usage du produit.

Certains appareils de cuisson utilisent des plateaux de chauffe en matières minérales, par exemple du verre, à la fois pour des raisons esthétiques et pour des raisons techniques. Un plateau en matière minérale s'avère par exemple très facile à nettoyer et présente une rigidité accrue et une usure réduite par rapport à un plateau en métal. Le plateau surplombant la résistance chauffante peut offrir une transparence qui permet de garder la visibilité sur les aliments en cours de cuisson. De tels plateaux sont supportés à leurs extrémités par un ou plusieurs montants, ce qui permet de les maintenir surélevés par rapport à la surface d'une table et de les maintenir fixes.

Un procédé d'assemblage connu d'un plateau minéral à des montants consiste à les solidariser par de la colle. Si le procédé est a priori simple à mettre en oeuvre, il pose cependant un certain nombre de problèmes. La colle choisie doit correspondre au couple de matériaux du plateau et du montant et répondre aux contraintes mécaniques et thermiques imposées par l'appareil. La partie collée doit être masquée pour garantir une bonne esthétique de la liaison. Enfin, le temps de mise en oeuvre et de durcissement de la colle est relativement important et impose une chaine de production et une logistique conséquente. De plus, en cas de défaut durant l'assemblage ou en cas d'altération durant l'utilisation de l'appareil, il n'est pas possible de séparer le plateau du montant auquel il est fixé, ce qui limite la réparabilité de l'appareil. Cela pose également un problème en fin de cycle de vie, puisque le plateau ne peut pas aisément être séparé des montants. Etant constitués de matériaux différents et devant être traités différemment, cela limite la recyclabilité de l'appareil.

Le document FR2978654 décrit un appareil de cuisson mobile muni d'un plateau en manière minérale. Un montant de l'appareil comprend une rainure pleine pour accueillir un bord du plateau.

Le document https://www.amazon.com/DOKU-Adiustable-Stainless-Brackets-Bathroom/dp/B0829TKTV8/ref=sr 1_195?crid=1JX095917600&dib=eyJ2ljoiMSJ9 .aSeeslkaKiQqeZcM7UBbkFwk4 zmtl9O_KV0XTdPTsh_K5faBCdQuEOHWfArk b_a2gHR7pzx1JePBwSsCsp4n9ta7AgQNe5cFEudUzZxspE9eVBbv-qCgDXwZfvn0Ds3.jMRYoCRiQr810FqYvRppM96iGFK8-1 vuwYqtm5T1nM&dib taq=se&keywords=qlass+clamp+stainless+steel+holder+ thick+glass&qid=1719806515&refinements=p 36%3A1200-2000&rnid=1243644011&sprefix=qlass+clamp+stainless+steel+holder+thick+qlas s%2Caps%2C142&sr=8-195 décrit des éléments de liaison d'un plateau de verre à un meuble. Cet élément de liaison comprend notamment un profilé en U pour accueillir des plaques de verre de différentes épaisseurs. Des vis de compression traversent une face latérale du profilé pour immobiliser la plaque de verre contre une autre face du profilé.

L'invention vise à résoudre un ou plusieurs de ces inconvénients. L'invention porte ainsi sur un appareil de cuisson mobile, tel que défini dans les revendications annexées.

L'invention porte également sur les variantes des revendications dépendantes. L'homme du métier comprendra que chacune des caractéristiques des variantes des revendications dépendantes et de la description peut être combinée indépendamment aux caractéristiques d'une revendication indépendante, sans pour autant constituer une généralisation intermédiaire.

L'invention porte également sur un procédé d'assemblage d'un appareil de cuisson mobile, tel que défini dans les revendications.

D'autres caractéristiques et avantages de l'invention ressortiront clairement de la description qui en est faite ci-après, à titre indicatif et nullement limitatif, en référence aux dessins annexés, dans lesquels :
[Fig.1] - est une vue en perspective d'un appareil de cuisson mobile selon un exemple de mode de réalisation de l'invention ;
[Fig.2] - est une vue en perspective d'un plateau intermédiaire en matière minérale de l'appareil de cuisson mobile;
[Fig.3] - est une vue en perspective de détails de la fixation du plateau de la figure 2 à un montant ;
[Fig.4] - est une vue en perspective d'un exemple d'élément de liaison d'un appareil selon l'invention ;
[Fig.5] - est une autre vue en perspective de l'élément de liaison de la figure 4 ;
[Fig.6] - est une vue en coupe transversale du montant de l'appareil de cuisson de la figure 1 ;
[Fig.7] - est une vue de face du montant de l'appareil de cuisson de la figure 1 ;
[Fig.8] - est une vue en perspective du montant de l'appareil de cuisson de la figure 1 ;
[Fig.9] - est une vue en coupe transversale de l'appareil de la figure 1 au niveau de la liaison entre le montant et le plateau ;
[Fig.10] - est une vue en perspective d'un cache utilisé pour masquer les éléments de liaison de l'appareil mobile de la figure 1.

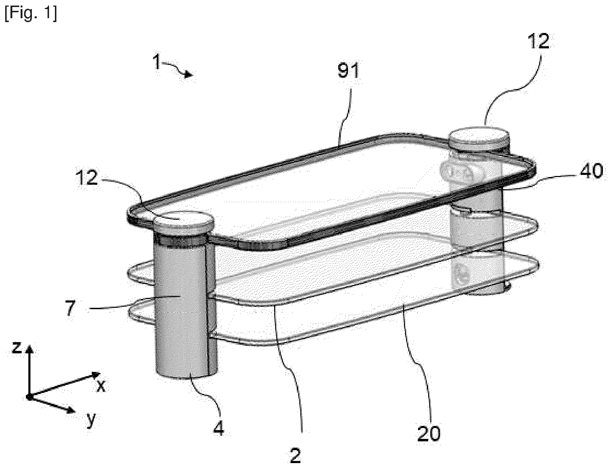

La figure 1 est une vue en perspective d'un appareil de cuisson mobile 1 selon un exemple de mode de réalisation de l'invention. L'appareil de cuisson mobile 1 est plus particulièrement destiné à cuire des lamelles de raclette ou d'autres aliments placés dans des coupelles. L'appareil 1 comprend notamment un plateau 2 et un montant 4. Dans l'exemple illustré et dans d'autres variantes envisageables, un tel appareil peut comprendre deux plateaux ou davantage, et/ou deux montants ou davantage.

Le plateau 2 est en matière minérale, par exemple en verre. Un tel plateau 2 est avantageux à la fois pour son esthétique et pour sa facilité de lavage. Le plateau 2 est destiné à être fixé au montant 4 de façon optimale. Le plateau 2 s'étend selon un plan de réception incluant les directions X, Y, les directions parallèles à ce plan de réception étant des directions radiales. La direction Z normale à ce plan de réception sera considérée comme une direction verticale. Le plateau 2 est destiné à recevoir des coupelles, par un accès selon différentes directions radiales.

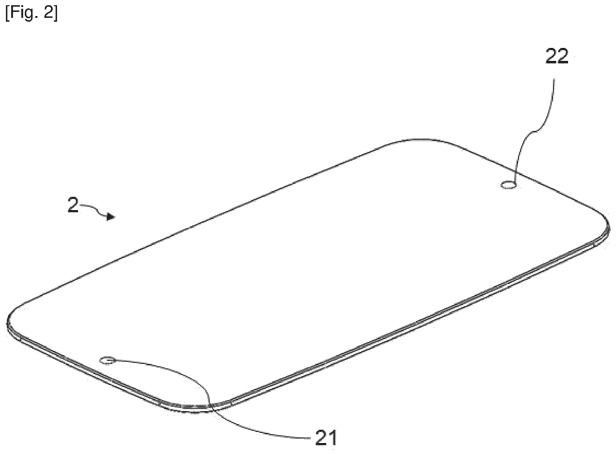

Un exemple de plateau 2 est plus précisément illustré en référence à la figure 2. Le plateau 2 comporte un évidement 21 selon la direction verticale. Cet évidement 21 est positionné à proximité d'un des bords du plateau. L'évidement 21 peut être traversant ou borgne. L'évidement 21 peut être formé par tout moyen approprié dans le plateau 2.

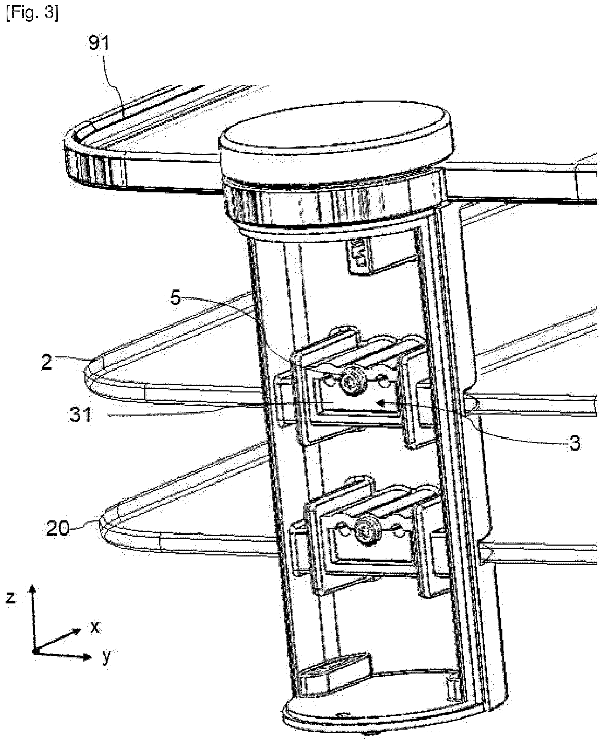

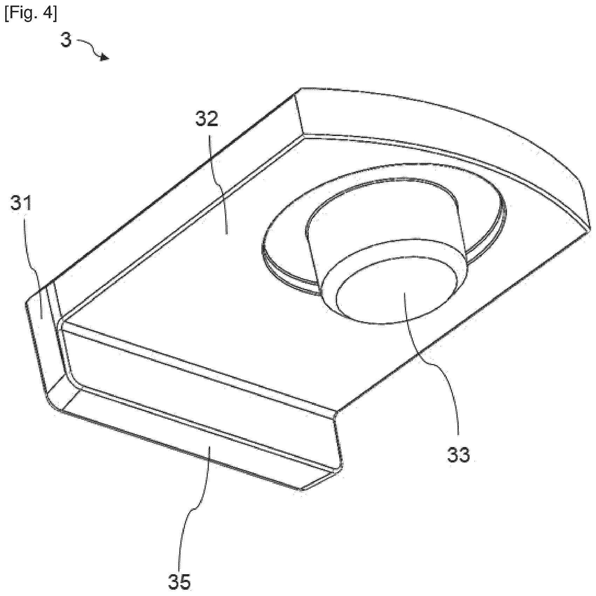

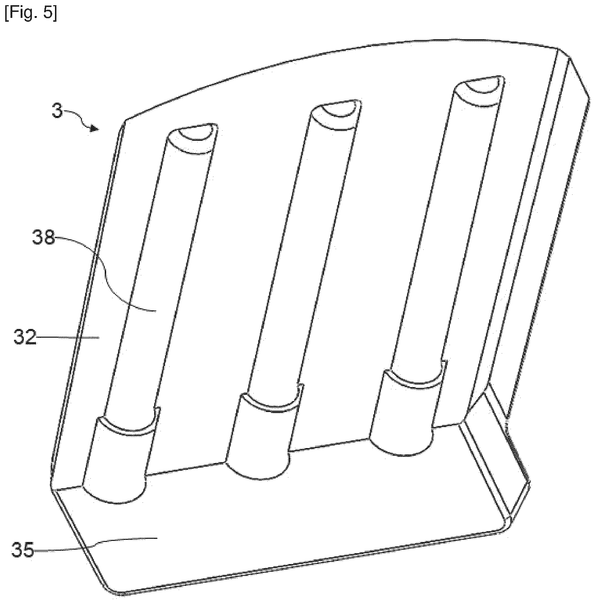

La figure 3 illustre une vue en perspective de détails de la fixation du plateau 2 au montant 4. Dans un souci de lisibilité, un capot externe 7 associé au montant 4 a été retiré ce qui permet de visionner l'intérieur du montant 4. La figure 3 permet d'identifier un élément de liaison 3 destiné à solidariser le plateau 2 au montant 4. L'élément de liaison 3 est illustré de façon plus détaillée sur les vues en perspective des figures 4 et 5. L'élément de liaison 3 comporte une platine 31, une partie de liaison 32 et un ergot 33.

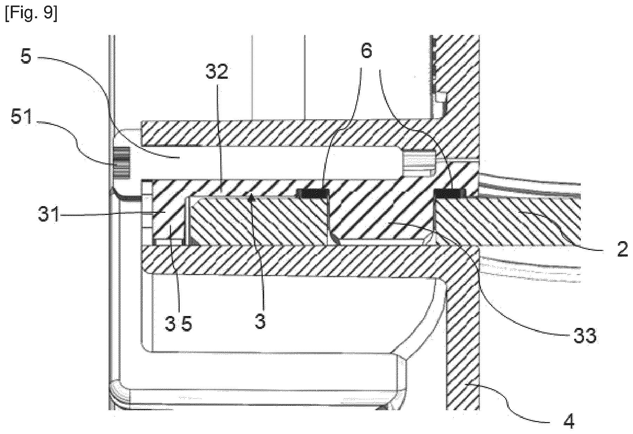

L'ergot 33 est en prise dans l'évidement 21 du plateau 2, comme illustré sur la vue en coupe de la figure 9. Les translations relatives entre le plateau 2 et l'élément de liaison 3 selon les directions radiales sont ainsi bridées, sans nécessiter un collage. La platine 31 est en saillie radialement par rapport au bord du plateau 2. La partie de liaison 32 est solidaire de la platine 31 et comporte l'ergot 33. La partie de liaison 32 assure la liaison mécanique entre la platine 31 et l'ergot 33. La partie de liaison 32 surplombe ici une partie du plateau 2 comprise entre le bord du plateau 2 et l'évidement 21.

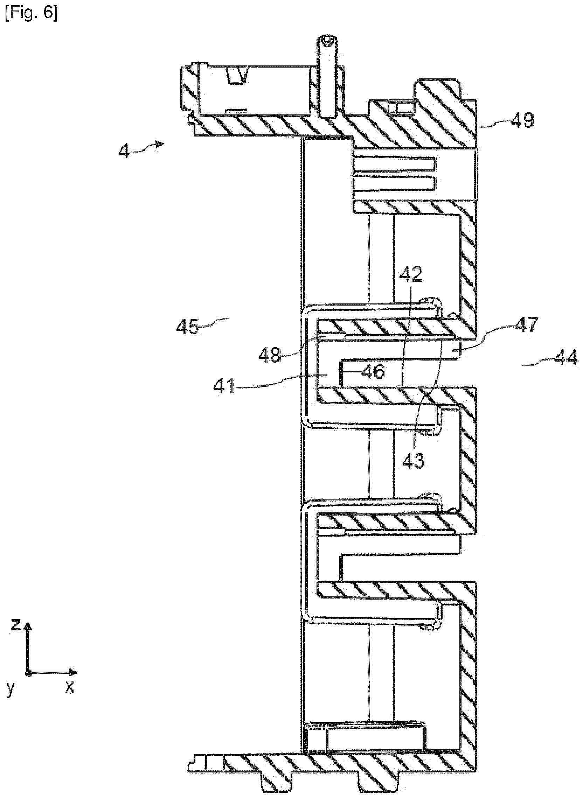

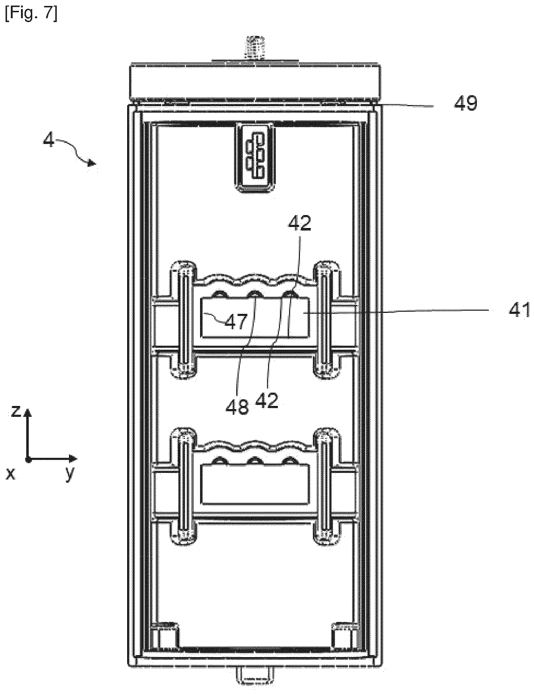

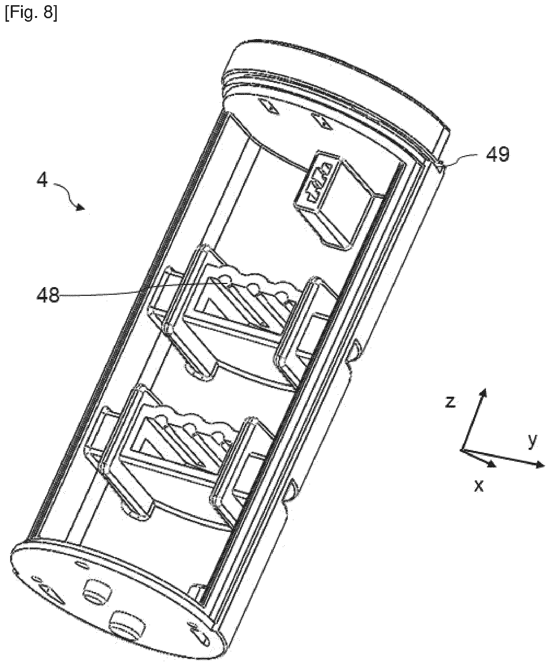

Les figures 6, 7 et 8 sont respectivement des vues en coupe de côté, de face et en perspective du montant 4. Le montant 4 comporte un conduit 41 s'étendant radialement pour présenter un accès depuis une face interne 44 et un accès depuis une face externe 45. L'accès par la face interne 44 permet notamment d'amener l'association de l'élément de liaison 3 et du plateau 2 jusqu'au conduit 41. Le montant comporte par ailleurs une butée inférieure 42 et une butée supérieure 43 du côté de la face interne 44. Les butées 42 et 43 sont ici formées de parois planes s'étendant radialement depuis le conduit 41. Une ouverture 46 du conduit 41 est positionnée verticalement entre la butée inférieure 42 et la butée supérieure 43. Ainsi, comme illustré aux figures 3 et 9, la platine 31 peut être insérée dans le conduit 41 en traversant l'ouverture 46, de façon à être accessible depuis la face externe 45. Avantageusement, la platine 31 est intégralement insérée dans le conduit 41, ce qui permet de loger la plus grande longueur possible du plateau 2 entre les butées 42 et 43. La partie de liaison 32 et le bord du plateau 2 sont alors positionnés entre la butée inférieure 42 et la butée supérieure 43. La partie de liaison 32 et l'ergot 33 sont ainsi positionnés entre la butée inférieure 42 et la butée supérieure 43 de façon à empêcher le retrait de l'ergot 33 de l'évidement 21.

Par ailleurs, comme illustré aux figures 3 et 9, un élément de fixation 5 est accessible depuis la face externe 45. L'élément de fixation 5 solidarise la platine 31 au montant 4. En immobilisant la platine 31 par rapport au montant 4, on immobilise également le plateau 2 par rapport au montant 4. L'ergonomie d'assemblage de l'appareil de cuisson 1 est particulièrement avantageuse, puisqu'on peut insérer l'ensemble élément de liaison 3/plateau 2 depuis la face interne 44 et assurer leur solidarisation par un accès aisé depuis la face externe 45.

Ainsi, l'invention permet de se dispenser de l'utilisation d'une colle et des multiples contraintes de conception associées, ainsi que du temps important de durcissement de la colle et de l'impossibilité de démontage de l'appareil soit durant son assemblage, soit en fin de cycle de vie.

L'élément de fixation 5 s'étend avantageusement radialement, et est disposé entre l'élément de liaison 3 et le montant 4. L'élément de fixation 5 comporte d'une part une partie en prise avec la platine 31 pour brider un mouvement radial de la platine 31 allant de la face externe 45 vers la face interne 44, et d'autre part une partie interférant avec le montant 4 pour brider son mouvement radial allant de la face externe 45 vers la face interne 44. Ainsi, un tel élément de fixation 5 s'insère entre l'élément de liaison 3 et le montant 4 pour assurer leur solidarisation. On peut ainsi conserver un élément de liaison 3 assez peu épais, puisqu'il n'y a pas besoin de prévoir un alésage fileté dans son épaisseur.

En particulier, l'élément de fixation 5 est une vis. La tête de la vis 51 interfère avec le montant 4 et son filetage est en prise dans un demi-alésage fileté 48 du montant 4 et en prise dans un demi-alésage fileté 38 de l'élément de liaison 3. Un demi alésage fileté 48 du montant 4 est notamment illustré aux figures 6 à 8. Les demi alésages filetés permettent ainsi de répartir l'encombrement de la vis 5 entre l'élément de liaison 3 et le montant 4.

Dans l'exemple illustré, l'élément de liaison 3 comporte avantageusement un rebord 35 en saillie verticalement sur le côté du plateau 2, pour brider un pivotement du plateau 2 autour d'une direction verticale. Un tel rebord 35 facilite ainsi la manipulation du plateau 2 avant son assemblage avec le montant 4.

Comme illustré à la figure 9, l'appareil 1 comprend avantageusement un anneau élastique 6 interposé entre l'élément de liaison 3 et le plateau 2, et ceinturant en outre l'ergot 33. L'anneau élastique 6 permet ainsi de compenser les tolérances géométriques entre les différentes pièces lors du montage, ce afin de minimiser le jeu entre l'élément de liaison 3 et le montant 4, et de compenser les différences de coefficient de dilatation entre l'élément de liaison 3 et le plateau 2, durant une chauffe de l'appareil.

Avantageusement, les matériaux du montant 4 et de l'élément de liaison 3 comportent les mêmes valeurs à 20% près pour l'une quelconque des propriétés physiques suivantes : le module d'élasticité, le coefficient de frottement ou la dureté de surface. Ces similitudes de propriétés physiques s'avèrent particulièrement appropriées lorsqu'une vis 5 assure la solidarisation entre l'élément de liaison 3 et le montant 4.

Le montant 4 de l'appareil de cuisson 1 comporte avantageusement une face latérale 47 afin d'empêcher l'élément de liaison 3 de pivoter autour d'un axe vertical. La face latérale 47 est par exemple prévue pour interférer avec la partie de liaison 32. Une autre face latérale peut être positionnée en vis-à-vis de la face latérale 47.

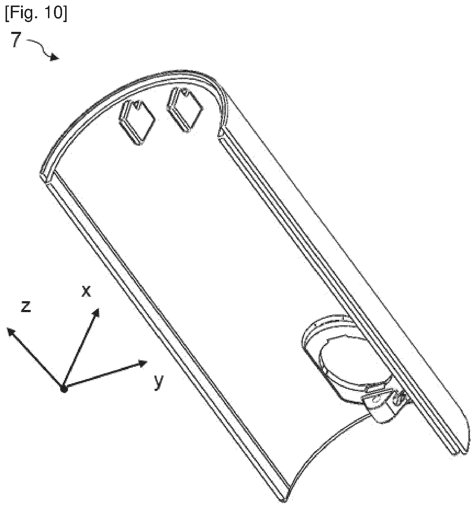

Avantageusement, le montant 4 comprend un tronçon 49 positionné au-dessus de la butée supérieure 43. Un tel tronçon 49 peut aussi être positionné en dessous de la butée supérieure, par exemple au niveau de l'embase du montant 4. Un tel tronçon 49 forme un contour fermé. La projection verticale du contour de ce tronçon 49 sur un plan de réception ceinture le contour de l'élément de liaison 3. Dit autrement, l'élément de liaison 3 est logé dans un espace confiné du montant 4 pour être le moins visible et accessible possible durant l'utilisation de l'appareil 1. L'intérieur du montant 4 peut être masqué par l'intermédiaire d'un capot rapporté 7, tel qu'illustré à la figure 10. Le capot 7 peut présenter un accès pour du câblage électrique ou pour une interface de commande. Le capot 7 peut être réaliser affleurant avec le tronçon 49. L'association entre le capot 7 et le montant 4 peut aboutir à une forme sensiblement cylindrique.

Avantageusement, l'appareil de cuisson 1 comprend au moins un autre plateau 20, présentant les mêmes caractéristiques que le plateau 2. Le plateau 2 est ici un plateau intermédiaire, le plateau 20 étant un plateau inférieur. Le plateau 20 peut être utilisé par exemple pour poser des plats ou objets n'ayant pas la nécessité d'être réchauffés. Le plateau 20 est également solidaire du montant 4. Le montant 4 s'étend d'un seul tenant entre les plateaux 2 et 20, de sorte qu'un montant 4 venu de matière peut être utilisé pour assurer la fixation de ces deux plateaux. Par ailleurs, l'association des plateaux 2 et 20 avec le montant 4 participe à la rigidité d'ensemble de l'appareil de cuisson 1. Le plateau 20 comporte ainsi un évidement à proximité d'un de ses bords, dans lequel l'ergot d'un autre élément de liaison 3 vient en prise, l'ensemble étant fixé dans le montant entre d'autres butées inférieure et supérieure, positionnées de part et d'autre de l'ouverture d'un conduit. Un élément de fixation 5 vient également solidariser cet autre élément de liaison 3 au montant 4.

Dans l'exemple illustré, l'appareil de cuisson 1 comprend encore un autre plateau 91, présentant des caractéristiques similaires à celles du plateau 2. Le plateau 91 est ici un plateau supérieur présentant des caractéristiques proches de celles du plateau 2. Le plateau 91 peut par exemple comporter un évidement pour permettre sa fixation au montant 4 par l'intermédiaire d'un ergot. Le plateau 91 peut par exemple surmonter une résistance de chauffage positionnée à l'aplomb du plateau 2. Le montant 4 s'étend également avantageusement en continu entre le plateau 2 et le plateau 91.

Dans l'exemple illustré, l'appareil 1 comporte un autre montant 40. Le plateau 2 (ainsi que les plateaux 20 et 91) sont également solidaires du montant 40. L'autre montant 40 comporte les mêmes caractéristiques mécaniques que le montant 4, en particulier les interfaces avec les plateaux 2, 20 et 91, avec les éléments de liaison 3 ou avec les éléments de fixation 5. Des éléments de liaison identiques aux éléments de liaison 3 sont utilisés pour solidariser les plateaux 2 et 20 au montant 40, de façon similaire à la fixation avec le montant 4. En particulier, le plateau 2 comporte un évidement 22 positionné au niveau d'un bord opposé à l'évidement 21, cet évidement 22 étant destiné à venir en prise avec un ergot d'un élément de liaison 3. On peut constater que l'association de plusieurs montants et plusieurs plateaux participe à la stabilité de la structure de l'appareil 1. Par ailleurs, cette conception permet de solidariser un plateau 2 ou 20 à un montant, alors que ce plateau est déjà solidarisé à un autre montant, garantissant une certaine stabilité en cours d'assemblage.

Pour assurer une tenue optimale d'un plateau 2 et notamment limiter son pivotement par rapport au montant 4, les butées 42 et 43 présentent avantageusement une dimension d'au moins 25mm selon la direction X. Pour immobiliser de façon optimale l'élément de liaison 3 entre les butées 42 et 43, le jeu entre l'élément de liaison 3 et les butées 42 et 43 est avantageusement inférieur à 1mm. Un tel jeu permet également d'éviter que l'ergot 33 ne puisse sortir de l'évidement 21 et garantit une surface de recouvrement suffisante entre l'élément de fixation 5, l'élément de liaison 3 et le montant 4.

## Revendications

1. [Appareil de cuisson mobile (1), **caractérisé en ce qu'**il comprend :
- un plateau en matière minérale (2) s'étendant selon un plan de réception, les directions parallèles à ce plan de réception étant des directions radiales, la direction normale à ce plan de réception étant une direction verticale, le plateau (2) comportant un premier évidement (21) selon la direction verticale positionné à proximité d'un de ses bords ;
- un premier élément de liaison (3) comportant une platine (31) en saillie radialement par rapport audit bord, une partie de liaison (32) solidaire de la platine (31) et comportant un ergot (33) en prise dans ledit premier évidement (21) ;
- un montant (4) présentant un conduit (41) s'étendant radialement pour présenter un accès depuis une face interne (44) et depuis une face externe (45) du montant (4), le montant comprenant une butée inférieure (42) et une butée supérieure (43) du côté de la face interne, une ouverture (46) du conduit (41) étant positionnée verticalement entre la butée inférieure (42) et la butée supérieure (43), ladite platine (31) traversant l'ouverture (41), la partie de liaison (32) et l'ergot (33) étant positionnés entre la butée inférieure (42) et la butée supérieure (43) de façon à empêcher le retrait de l'ergot (33) dudit premier évidement (21) ;
- un élément de fixation (5) accessible depuis ladite face externe (45) et solidarisant la platine (31) au montant (4).

2. Appareil de cuisson mobile (1) selon la revendication 1, dans lequel ledit élément de fixation (5) s'étend radialement entre la platine (31) et le montant (4) et comporte d'une part une partie en prise avec la platine (31) pour brider un mouvement radial de la platine (31) allant de la face externe vers la face interne, et d'autre part une partie (51) interférant avec le montant (4) pour brider son mouvement radial allant de la face externe vers la face interne.

3. Appareil de cuisson mobile (1) selon la revendication 2, des lequel ledit élément de fixation (5) est une vis dont la tête (51) interfère avec le montant (4) et dont le filetage est en prise dans un demi-alésage fileté du montant (4) et en prise dans un demi-alésage fileté de la platine (31).

4. Appareil de cuisson mobile (1) selon l'une quelconque des revendications précédentes, dans lequel le premier élément de liaison (3) comporte un rebord (35) en saillie verticalement sur le côté du plateau pour brider un pivotement du plateau (2) autour d'une direction verticale.

5. Appareil de cuisson mobile (1) selon l'une quelconque des revendications précédentes, comprenant un anneau élastique (6) interposé entre le premier élément de liaison (3) et le plateau (2) et ceinturant ledit ergot (33).

6. Appareil de cuisson mobile (1) selon l'une quelconque des revendications précédentes, dans lequel les matériaux du montant (4) et du premier élément de liaison (3) comportent les mêmes valeurs à 20% près pour l'une quelconque des propriétés physiques suivantes : module d'élasticité, coefficient de frottement ou dureté de surface.

7. Appareil de cuisson mobile (1) selon l'une quelconque des revendications précédentes, dans lequel le montant (4) comprend un tronçon (49) positionné au-dessus ou en dessous de la butée supérieure (43), la projection verticale du contour de ce tronçon sur un plan de réception ceinturant le contour de l'élément de liaison (3).

8. Appareil de cuisson mobile (1) selon l'une quelconque des revendications précédentes, comprenant au moins un autre plateau (20) solidaire dudit montant (4), ledit montant (4) s'étendant d'un seul tenant entre lesdits plateaux.

9. Appareil de cuisson mobile (1) selon l'une quelconque des revendications précédentes, comprenant au moins un autre montant (40) présentant les mêmes caractéristiques que ledit montant, et comprenant un deuxième élément de liaison présentant les mêmes caractéristiques que ledit premier élément de liaison (3), ledit plateau (2) comportant un deuxième évidement (22) selon la direction verticale et positionné à proximité d'un autre de ses bords ;
- l'ergot du deuxième élément de liaison étant en prise dans ledit deuxième évidement (22), la platine du deuxième élément de liaison traversant l'ouverture de l'autre montant, la partie de liaison et l'ergot du deuxième élément de liaison étant positionnés entre la butée inférieure et la butée supérieure de l'autre montant de façon à empêcher le retrait de cet ergot du deuxième évidement (22).

10. Procédé d'assemblage d'un appareil de cuisson mobile (1), comprenant les étapes de :
- fournir un plateau en matière minérale (2) s'étendant selon un plan de réception, les directions parallèles à ce plan de réception étant des directions radiales, la direction normale à ce plan de réception étant une direction verticale, le plateau (2) comportant un premier évidement (21) selon la direction verticale positionné à proximité d'un de ses bords ;
- solidariser un premier élément de liaison (3) au plateau (2), l'élément de liaison (3) comportant une platine (31) positionnée en saillie radialement par rapport audit bord, une partie de liaison (32) solidaire de la platine (31) et comportant un ergot (33) positionné en prise dans ledit premier évidement (21) ;
- fournir un montant (4) présentant un conduit (41) s'étendant radialement pour présenter un accès depuis une face interne (44) et depuis une face externe (45) du montant (4), le montant comprenant une butée inférieure (42) et une butée supérieure (43) du côté de la face interne, une ouverture (46) du conduit (41) étant positionnée verticalement entre la butée inférieure (42) et la butée supérieure (43) ;
- positionner ladite platine (31) de façon à traverser l'ouverture (41), et de façon à positionner la partie de liaison (32) et l'ergot (33) entre la butée inférieure (42) et la butée supérieure (43) de façon à empêcher le retrait de l'ergot (33) dudit premier évidement (21) ;
- solidariser la platine (31) au montant (4) par l'intermédiaire d'un élément de fixation (5) depuis ladite face externe (45).
